# EUROPEAN PATENT APPLICATION

(11) **EP 4 178 239 A1**
(43) Date of publication of application: **10.05.2023**
(21) Application number: 22205230.0
(22) Date of filing: 03.11.2022
(51) Int. Cl.: H04W 4/50, H04W 8/20

(54) **METHOD, DEVICE, APPARATUS AND COMPUTER-READABLE MEDIUM FOR UPDATING SUBSCRIBER SUBSCRIPTION DATA**

(30) Priority: 03.11.2021 CN 202111293368
(71) Applicant: Nokia Solutions and Networks Oy, 02610 Espoo (FI)
(72) Inventor: LI, Xinwei, Shanghai (CN); LIU, Yuyu, Shanghai (CN); ZHANG, Min, Shanghai (CN); HE, Bing, Shanghai, 201206 (CN)
(74) Representative: DREISS Patentanwälte PartG mbB

(57) **Abstract**

Embodiments of the present disclosure relate to a method, device and apparatus for updating subscriber subscription data of a subscriber identity module, and a computer-readable medium. The method includes: at a terminal device, based on determining that an indication to indicate an initial subscription data file of a subscriber identity module is to be updated is received from a remote device, acquiring, from the indication, extended information for supporting a subscription data file update procedure; triggering the subscription data file update procedure at the terminal device based on the extended information; and updating the initial subscription data file based on subscription data file update information acquired in the subscription data file update procedure. In this way, a subscription data file update operation of a CPE can be implemented in a subscriber-transparent manner, thereby improving the system security and the subscriber experience.

## Description

### FIELD

Embodiments of the present disclosure relate to the field of communications, and more particularly, to a method, device, apparatus and a computer-readable medium for updating subscriber subscription data of a subscriber identity module.

### BACKGROUND

At present, many consumer electronic devices employ subscriber identity module (SIM) cards, which are integrated or embedded into the devices. Such subscriber identity module cards are widely used in terminal devices.

During the use of the terminal device, due to a change in network or system performance, a corresponding SIM subscription data file may often need to be updated on the terminal device.

### SUMMARY

In general, embodiments of the present disclosure relate to a method for updating subscriber subscription data of a subscriber identity module.

In a first aspect of the present disclosure, a method for updating subscriber subscription data of a subscriber identity module is provided. The method includes: at a terminal device, based on determining that an indication to indicate the subscriber identity module is to be updated is received from a remote device, acquiring, from the indication, extended information for supporting a subscription data file update procedure; triggering the subscription data file update procedure at the terminal device based on the extended information; and updating the subscriber identity module based on subscription data file update information acquired in the subscription data file update procedure.

In a second aspect of the present disclosure, a method for updating subscriber subscription data of a subscriber identity module is provided. The method includes: at a remote device, generating an indication that the subscriber identity module at a terminal device is to be updated at least based on extended information for supporting a subscription data file update procedure; sending the indication to the terminal device; and sending subscription data file update information to the terminal device based on determining that the subscription data file update procedure at the terminal device is triggered.

In a third aspect of the present disclosure, a device for updating subscriber subscription data of a subscriber identity module is provided. The device includes at least one processor; and a memory coupled to the at least one processor, wherein the memory includes an instruction stored therein, and when executed by the at least one processing unit, the instruction causes the device to execute the method in the first aspect.

In a fourth aspect of the present disclosure, a device for updating subscriber subscription data of a subscriber identity module is provided. The device includes at least one processor; and a memory coupled to the at least one processor, wherein the memory includes an instruction stored therein, and when executed by the at least one processing unit, the instruction causes the device to execute the method in the second aspect.

In a fifth aspect of the present disclosure, an apparatus for updating subscriber subscription data of a subscriber identity module is provided. The apparatus includes: means for based on determining that an indication to indicate the subscriber identity module is to be updated is received from a remote device, acquiring, from the indication, extended information for supporting a subscription data file update procedure; means for triggering the subscription data file update procedure at the terminal device based on the extended information; and means for updating a subscription data file based on subscription data file update information acquired in the subscription data file update procedure.

In a fifth aspect of the present disclosure, an apparatus for updating subscriber subscription data of a subscriber identity module is provided. The apparatus includes: means for generating an indication that the subscriber identity module at a terminal device is to be updated at least based on extended information for supporting a subscription data file update procedure; means for sending the indication to the terminal device; and means for sending subscription data file update information to the terminal device based on determining that the subscription data file update procedure at the terminal device is triggered.

In a seventh aspect of the present disclosure, a computer-readable medium is provided. An instruction is stored on the computer-readable medium, and when the instruction is executed by at least one processing unit, the at least one processing unit is configured to execute the method in the first aspect.

In an eighth aspect of the present disclosure, a computer-readable medium is provided. An instruction is stored on the computer-readable medium, and when the instruction is executed by at least one processing unit, the at least one processing unit is configured to execute the method in the second aspect.

It should be understood that, the content described in the Summary of the Invention is not intended to limit critical or important features of the embodiments of the present disclosure, nor is it intended to limit the scope of the present disclosure. Other features of the present disclosure will become readily understood from the following description.

### BRIEF DESCRIPTION OF THE DRAWINGS

The embodiments of the present disclosure are presented by way of example, and their advantages are explained in more detail below with reference to the drawings, wherein:
Fig. 1 is a schematic diagram of a communication network 100 in which embodiments described in the present disclosure may be implemented;
Fig. 2 illustrates a signaling diagram of a procedure for updating subscriber subscription data of a subscriber identity module according to some embodiments of the present disclosure;
Fig. 3 illustrates a flow diagram of a method for updating subscriber subscription data of a subscriber identity module according to some embodiments of the present disclosure;
Fig. 4 illustrates a flow diagram of a method for updating subscriber subscription data of a subscriber identity module according to some embodiments of the present disclosure;
Fig. 5 illustrates a simplified block diagram of an electronic device that is suitable for implementing the embodiments of the present disclosure; and
Fig. 6 illustrates a schematic diagram of a computer-readable medium that is suitable for implementing the embodiments of the present disclosure.

In all figures, the same or similar reference signs refer to the same or similar elements.

### DETAILED DESCRIPTION OF EMBODIMENTS

The principles and spirit of the present disclosure will be described below with reference to several exemplary embodiments shown in the drawings. It is to be understood that these embodiments are described only for the purpose of illustration and help those skilled in the art to understand and implement the present disclosure, without suggesting any limitation as to the scope of the disclosure.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a new radio next generation node B (NR Next Generation NodeB or gNB), a Remote Radio Unit (RRU), a radio header (RH), a remote radio head (RRH), a relay, a low power node such as a femto, a pico, specifically depending on the terms and technologies applied. An RAN division architecture includes a gNB concentrated unit that controls a plurality of gNB distributed units. In the following description, the terms "network device", "communication device", "base station" and the like may be used interchangeably.

The network device may also include any suitable device in a core network, for example, multi-standard radio (MSR) radio devices such as an MSR BS, a network controller (BSC) such as a radio network controller (RNC) or a base station controller, a multicell/multicast coordination entity (MCE), a mobile switching center (MSC), an MME, an operation and management (O&M) node, an operation support system (OSS) node, a selforganizing network (SON) node, a positioning node such as an enhanced service mobile location center (E-SMLC), and/or a mobile data terminal (MDT).

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

Although the functions described herein may be executed in fixed and/or wireless network nodes in various exemplary embodiments, in other exemplary embodiments, the functions may be implemented in a subscriber equipment apparatus (e.g., a mobile phone or a tablet computer or a notebook computer or a desktop computer or a mobile Internet of Things device or a fixed Internet of Things device). Such subscriber equipment apparatus may, for example, be equipped with corresponding capabilities as described in combination with the fixed and/or wireless network nodes, depending on conditions. The subscriber equipment apparatus may be a subscriber equipment and/or a control device, for example, a chip set or a processor, which is configured to control the subscriber equipment when installed in the subscriber equipment. Examples of such functions include a guidance server function and/or a home subscriber server, which may be implemented in the subscriber equipment apparatus by providing, for the subscriber equipment apparatus, software that is configured to make the subscriber equipment apparatus executed in the perspective of these functions/nodes.

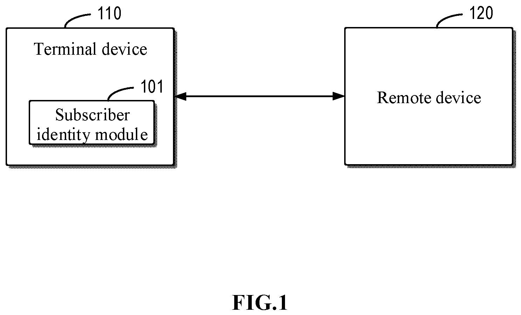

Fig. 1 is a schematic diagram of a communication network 100 in which embodiments described in the present disclosure may be implemented. As shown in Fig. 1, the communication system 100 includes a terminal device 110 and a remote device 120. The terminal device 110 may communicate with the remote device 120. The terminal device 110 is associated with a subscriber identity module card 101.

In the present disclosure, the terminal device 110 may also relate to a customer premises equipment (CPE) or any consumer electronic device having a communication function. The remote device 120 may also be referred to as a network device, and relates to at least one of an automatic configuration server (ACS) and a subscription management data preparation platform (SM-DP+).

It should be understood that, the number of network devices and terminal devices is shown for illustrative purposes only, and does not imply any limitation. The communications network 100 may include any suitable number of network devices and terminal devices. The communication between the network device 110 and the terminal device 120 may be implemented by utilizing any suitable technology, which is already present or will be developed in the future.

As described above, at present, many consumer electronic devices employ subscriber identity module (SIM) cards, which are integrated or embedded into the devices. Such subscriber identity module cards are widely used in terminal devices.

During an application procedure of the terminal device, due to a change in network or system performance, a corresponding SIM subscription data file may often need to be updated on the terminal device.

At present, the update of a subscription data file of the subscriber identity module in the CPE often needs to be implemented by other terminals of a local subscriber. However, the property right of the CPE does not belong to a subscriber, but belongs to a service provider, and the built-in SIM card also belongs to the property of the service provider. Therefore, different from a customer terminal device, the service provider must have greater management and control capability over the device. Therefore, it is desirable for the CPE that any update operation for the subscriber identity module should be transparent to the subscriber, such that the service provider may skip a terminal subscriber and directly manage the SIM subscription data file, so as to realize the greater management and control capability of the service provider over assets. Meanwhile, a better experience is brought to the subscriber due to the avoidance of the participation of the terminal subscriber.

In view of this, an embodiment of the present disclosure provides a solution for updating subscriber subscription data of a subscriber identity module (SIM). In the solution, based on determining that an indication to indicate an initial subscription data file of the SIM is to be updated is received from a remote device, a terminal device acquires, from the indication, extended information for supporting a subscription data file update procedure, and triggers the subscription data file update procedure at the terminal device based on the extended information. The terminal device updates the initial subscription data file based on subscription data file update information, which is acquired in the subscription data file update procedure. In this way, a subscription data file update operation of a CPE can be implemented in a subscriber-transparent manner, thereby improving the system security and the subscriber experience.

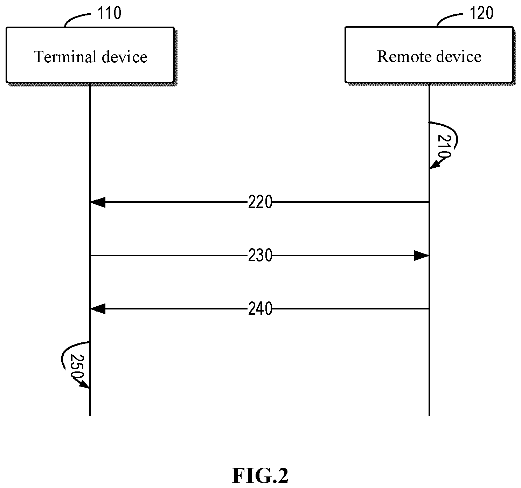

The principles and implementation modes of the present invention will be described in detail below with reference to Fig. 2, which illustrates a signaling diagram of an exemplary procedure 200 for updating subscriber subscription data of a subscriber identity module according to an embodiment of the present disclosure. For purposes of discussion, the procedure 200 will be described with reference to Fig. 1. As shown in Fig. 1, the procedure 200 may relate to a terminal device 110 and a remote device 120.

One or more SIMs may be configured at the CPE. The SIM may relate to an embedded SIM (eSIM) or an integrated SIM (iSIM). The method for updating the subscriber subscription data of the subscriber identity module described in the present disclosure may be applicable to the embedded SIM (eSIM) or the integrated SIM (iSIM). In addition, the method provided in the present disclosure may be implemented on other suitable types of SIMs.

The SIM configured at the CPE may be pre-configured with at least one initial subscription data file. Based on the pre-configured initial subscription data file, the CPE may be connected to a suitable network. It should be understood that, the initial subscription data file is not necessary for the SIM, and an IP connection channel may also be established between the terminal device and the remote device in other manners.

As shown in Fig. 2, if the remote device 120 determines that the SIM at the terminal device 110 is to be updated, for example, an initial subscription file is to be updated, the remote device 120 generates 210, based on extended information for supporting a subscription data file update procedure, an indication that an initial subscription data file of the SIM is to be updated.

In some exemplary embodiments, the extended information may relate to extended information based on a TR069 and TR181 protocol group. In general, TR069 is a communication protocol for CPE and ACS.

In some embodiments, the extended information may be represented in the following form:

**Table 1: Examples of the extended information based on the TR069 and TR181 protocol group.**

| Device, cellular network, interface, {i}, eSIM | Object | - | eSIM parameters for the interface | | - | |
|---|---|---|---|---|---|---|
| Status | String | | Current status of an eSIM card, enumeration: | | | |
| | | | | • "None" (there is no available eSIM card) | | |
| | | | | • "Available" (the eSIM card is available, but is not verified) | | |
| | | | | • "Valid" (the subscription data file of at least one eSIM card may be used) | | |
| | | | | • "Empty" (there is no subscription data file in the eSIM card) | | |
| | | | | • "Error" (an error is detected in the eSIM card, optional) | | |
| Enable | Boolean type | | Enable or disable the eSIM card | | | |
| | | | | • In the current implementation, this flag is controlled only by pre-configuration, not ACS | | |
| EID | string (32) | | "eUICC-ID" is a unique identity for the eSIM | | | |
| | | | The structure of EID is as follows: | | | |
| | | | ABCCCDDDEEEEEEEEEEFFFFFFFFFFFFG G | | | |
| | | | | • A-Major industrial identity | | |
| | | | | • B-Telecommunication, default to be 9 | | |
| | | | | • CCC-Country code | | |
| | | | | • DDD-Publisher identity (6) | | |
| | | | | • EEEEEEEEEE-Specific information and version information of a publisher, the first 5 Es refer to operating system information, and the last 5 Es refer to additional information | | |
| | | | | • FFFFFFFFFFFF-Personal identity number | | |
| | | | | • GG-Check digit | | |
| ActiveProfileICC ID | String - (6:20) | | Enabled subscription data file with ICCID | | | |
| CurrentUsedProfi leICCID | String - (6:20) | | Currently used subscription data file of ICCID | | | |
| ProfileUpdatefail ureBehavior | Boolean type | | If it is true, in the case of configuration file update failure, the eSIM will use a previously used configuration file; | | | |
| | | | if it is false, in the case of configuration file update failure, the eSIM will not perform any operation for updating a local subscription data file; and | | | |
| | | | as a default value, it will be set to be true | | | |
| *"ProfileNumberO fEntries"* | Unsigne d int | | The number of items in a table of *"ManageableDevices"* (manageable devices) | | | |

It should be understood that, the example of the extended information shown above is for illustrative purposes only, and the extended information is not limited to this format only. Other extended information capable of supporting subscription data file update may also be used in the present solution. In the present example, parameters included in the extended information may be added, deleted or modified. In the present example, the attribute description for some specific parameters is for illustrative purposes only, and the parameters may also be assigned other attributes in different implementation scenarios.

After generating the indication that the SIM is to be updated, the remote device 120 sends 220 the indication to the terminal device 110. The subscription data file update procedure at the terminal device 110 is triggered.

In some exemplary embodiments, if the terminal device 110 receives the indication that the initial subscription data file of the SIM is to be updated, the CPE will notify an internal local subscription data file assistant (LPad) for updating the subscriber subscription data of the subscriber identity module, and the subscription data file update procedure will be triggered.

In some embodiments, the terminal device 110 may acquire, from the indication, the extended information for supporting the subscription data file update procedure. Based on the extended information and the initial subscription data file that has been pre-configured at the terminal device 110, the terminal device 110 may establish 230 a connection between the terminal device 110 and the remote device 120 for transmitting subscription data file update information.

In some embodiments, the connection between the terminal device 110 and the remote device 120 for transmitting the subscription data file update information may include a connection from the LPad to the SM-DP+ at the terminal device 110. Thus, after the connection is established, the LPad may trigger the transmission of the subscription data file update information from the SM-DP+.

The remote device 120 may send 240 the subscription data file update information to the terminal device 110. The subscription data file update information may include one or more target subscription data files. The at least one target subscription data file may include parameters associated with the subscription data file update procedure.

In some embodiments, the extended information may be represented in the following form:

**Table 2: Examples of the subscription data file update information**

| Device, cellular network, interface, {i}, eSIM, subscription data file | Object | R- | eSIM parameters for an interface | |
|---|---|---|---|---|
| ProfileNickName | String (6) | w | Subscription data file nickname for the subscription data file | |
| SPN | String (8) | | Service provider name | |
| ProfileClass | Integer | | Subscription data file class of eSIM | |
| Status (status) | Enumer ation | | Enable | |
| | | | Disable | |
| | | | Error | |
| | | | Unknown | |
| IMSI | String - (14:15) | | An international mobile subscriber identity is represented as a string of 14 or 15 digits (digits 0-9). The first three digits are mobile country codes (MCC), followed by mobile network codes (MNC), which may be two digits (European standard) or three digits (North American standard), and followed by mobile subscriber identification numbers (MSIN). | |
| | | | Possible modes: | |
| | | | [0-9]{14,15} | |
| ICCID | String - (6:20) | | An integrated circuit card identifier is represented as a string of at most 20 digits (digits 0-9). The serial numbers are composed of the following parts: | |
| | | | | • Major industrial identity (MII), 2 fixed digits, 89 for telecommunications. |
| | | | | • Country code, 1-3 digits, defined to be [ITU-E.164] by ITU-T as a recommendation. |
| | | | | • Identifier, 1-4 digits. |
| | | | | • Personal account identity number. Its length is variable, but each digit under an IIN has the same length. |
| | | | | • Single check digit calculated from other digits by using the Luhn algorithm. |
| | | | Card used for using ICCID according to [ITU-E 118]. The maximum length is 19 bits, and the maximum length of a GSM card is 20 bits. Possible modes: | |
| | | | | • [0-9]{6,20} |
| MSISDN | String - (14:15) | | Integrated service digital network number of mobile subscriber, which is a number for uniquely identifying subscription in a GSM, UMTS or LTE mobile network. [ITU-E. 164] | |
| | | | Possible modes: | |
| | | | [0-9] {14,15} | |
| AcCode | String | | eSIM activation code: | |
| | | | AC Format: activation code format. This activation code format and any subsequent backward compatible formats should be set to be "1". | |
| | | | Delimiter: should be set to be "$" | |
| | | | SM-DP+ address: | |
| | | | Fully-defined domain name (FQDN) of SM-DP+ | |
| | | | (For example, SMDP. GSMA. COM) is limited to an alphanumeric pattern character set defined in Table 5 of ISO/IEC 18004 [15], excluding '$' | |
| | | | Delimiter: should be set to be "$" | |
| | | | AC_ Token: *"Matching ID"* (matching ID) as | |
| | | | described in chapter (4.1.1) | |
| | | | Delimiter: should be set to be "$" | |
| | | | SM-DP+ OID: M-DP+ OID in CERT.DPauth.ECDSA (optional) | |
| | | | Delimiter: should be set to be "$" (optional) | |
| | | | Mark required for a confirmation code: if a confirmation code is required, it should be displayed and set to be "1"; and otherwise, it will not exist (optional) | |
| | | | Example: | |
| | | | □□ 1$SMDP.GSMA.COM$04386-AGYFT-A74Y8-3F815 (if there is no SM-DP+ OID or Confirmation Code Required Flag) | |
| | | | □ 1$SMDP.GSMA.COM$04386-AGYFT-A74Y8-3F815$$1 (if there is no SM-DP+ OID, but Confirmation Code Required Flag is present) | |
| ConfirmationCode | String | | eSIM confirmation code | |
| | | | The configuration file downloading sequence may be protected by a specific confirmation code. The way to provide the confirmation code for a final subscriber is beyond the scope of the present specification. | |

It should be understood that, the example of the update information shown above is for illustrative purposes only, and the update information is not limited to this format only. Other update information capable of supporting subscription data file update may also be used in the present solution. In the present example, parameters included in the update information may be added, deleted or modified. In the present example, the attribute description for some specific parameters is for illustrative purposes only, and the parameters may also be assigned other attributes in different implementation scenarios.

In some embodiments, the connection between the terminal device 110 and the remote device 120 for transmitting the subscription data file update information may be a connection based on a hypertext transfer protocol (HTTPS).

Referring back to Fig. 2, based on the received subscription data file update information, the terminal device 110 may update 250 the SIM.

In general, the "subscription data file update" involved in the present disclosure may include operations such as adding, enabling and deleting the subscription data file. It should be understood that, other operations, which may be applicable to updating the subscriber subscription data of the subscriber identity module, also fall within the scope of the present application.

In some embodiments, a remote procedure call (RPC) for eSIM subscription data file update may be used as standard TR069 "AddObject ", "DeleteObject" and "SetParam values", so as to add/delete/modify the eSIM subscription data file, the "AddObject", "DeleteObject" and "SetParam values" are RPC of the TR069 and TR181 protocol group, so it only uses the current mechanism, and the ACS side does not require special RPC processing.

In this way, the subscription data file update operation of the CPE can be implemented in a subscriber-transparent manner, thereby improving the system security and the subscriber experience.

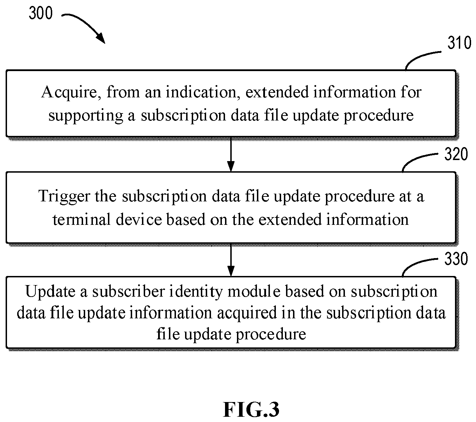

Fig. 3 illustrates a flow diagram of an exemplary method 300 for updating subscriber subscription data of a subscriber identity module according to some embodiments of the present disclosure. The method 300 may be implemented at the terminal device 110 as shown in Fig. 1. For purposes of discussion, the method 300 will be described with reference to Fig. 1.

In block 310, based on determining that an indication to indicate the subscriber identity module is to be updated is received from a remote device, the terminal device acquires, from the indication, extended information for supporting a subscription data file update procedure.

In some embodiments, acquiring the extended information includes: acquiring at least one of the following: an indication for enabling the subscriber identity module, an indication for disabling the subscriber identity module, an indication for triggering the download of the subscription data file update information based on an initial subscription data file, and a dedicated identity associated with the subscriber identity module.

In some embodiments, the extended information includes extended information based on a TR069 and TR181 protocol group.

In block 320, the terminal device triggers the subscription data file update procedure at the terminal device based on the extended information.

In some embodiments, triggering the subscription data file update procedure includes: acquiring the initial subscription data file, and establishing, based on the initial subscription data file and the extended information, a connection between the terminal device and the remote device for transmitting the subscription data file update information.

In some embodiments, the connection comprises a connection based on a hypertext transfer protocol.

In some embodiments, the method 300 further includes: receiving the subscription data file update information based on the established connection, wherein the subscription data file update information includes at least one target subscription data file, the at least one target subscription data file includes parameters associated with the subscription data file update procedure, and the parameters include at least one of a corresponding identity of the at least one target subscription data file, a service subscription data file name, an international mobile subscriber identity, an integrated circuit card identity, an integrated service digital network number of mobile subscriber, information for activating an updated subscription data file of the subscriber identity module, and security information for the updated subscription data file.

In block 330, the terminal device updates the subscriber identity module based on subscription data file update information acquired in the subscription data file update procedure.

In some embodiments, the subscriber identity module includes an embedded subscriber identity module, or an integrated subscriber identity module.

In some embodiments, the terminal device includes a customer premises equipment, and the remote device includes at least one of an automatic configuration server and a subscription management data preparation platform.

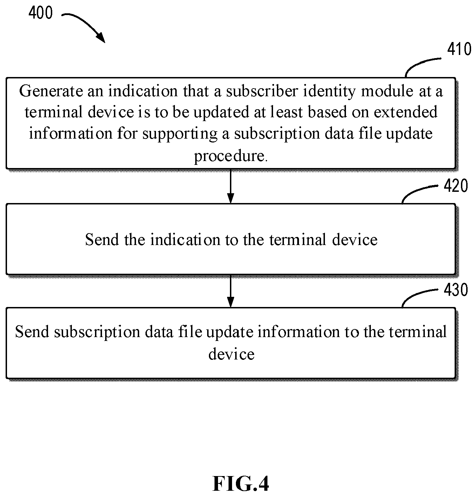

Fig. 4 illustrates a flow diagram of an exemplary method 400 for updating subscriber subscription data of a subscriber identity module according to some embodiments of the present disclosure. As shown in Fig. 4, the method 400 may be implemented at the network device 120 as shown in Fig. 1. For purposes of discussion, the method 400 will be described with reference to Fig. 1.

As shown in Fig. 4, in block 410, the remote device generates an indication that the subscriber identity module at a terminal device is to be updated at least based on extended information for supporting a subscription data file update procedure.

In some embodiments, the extended information includes at least one of an indication for enabling the subscriber identity module, an indication for disabling the subscriber identity module, an indication for triggering the download of the subscription data file update information based on an initial subscription data file, and a dedicated identity associated with the subscriber identity module

In some embodiments, the extended information includes extended information based on a TR069 and TR181 protocol group.

In block 420, the remote device sends the indication to the terminal device.

In some embodiments, sending the subscription data file update information to the terminal device includes: based on determining that a connection between the terminal device and the remote device for transmitting the subscription data file update information has been established, sending, by means of the connection, the subscription data file update information to the terminal device.

In some embodiments, the connection comprises a connection based on a hypertext transfer protocol.

In block 430, based on determining that the subscription data file update procedure at the terminal device is triggered, the remote device sends the subscription data file update information to the terminal device.

In some embodiments, the subscription data file update information includes at least one target subscription data file, the at least one target subscription data file includes parameters associated with the subscription data file update procedure, and the parameters include at least one of a corresponding identity of the at least one target subscription data file, a service subscription data file name, an international mobile subscriber identity, an integrated circuit card identity, an integrated service digital network number of mobile subscriber, information for activating an updated subscription data file of the subscriber identity module, and security information for the updated subscription data file.

In some embodiments, the subscriber identity module includes an embedded subscriber identity module, or an integrated subscriber identity module.

In some embodiments, the terminal device includes a customer premises equipment, and the remote device includes at least one of an automatic configuration server and a subscription management data preparation platform.

In some exemplary embodiments, a device capable of executing the method 300 (e,g., implementing the method at the terminal device 110) may include an apparatus for executing various steps of the method 300. The apparatus may be implemented in any suitable form. For example, the apparatus may be implemented in a circuit or software module.

In some exemplary embodiments, the apparatus includes: means for based on determining that an indication to indicate the subscriber identity module is to be updated is received from a remote device, acquiring, from the indication, extended information for supporting a subscription data file update procedure; means for triggering the subscription data file update procedure at the terminal device based on the extended information; and means for updating the subscriber identity module based on subscription data file update information acquired in the subscription data file update procedure.

In some exemplary embodiments, a device capable of executing the method 400 (e,g., implementing the method at the network device 120) may include an apparatus for executing various steps of the method 400. The apparatus may be implemented in any suitable form. For example, the apparatus may be implemented in a circuit or software module.

In some exemplary embodiments, the apparatus may include: means for generating an indication that the subscriber identity module at a terminal device is to be updated at least based on extended information for supporting a subscription data file update procedure; means for sending the indication to the terminal device; and means for sending subscription data file update information to the terminal device based on determining that the subscription data file update procedure at the terminal device is triggered.

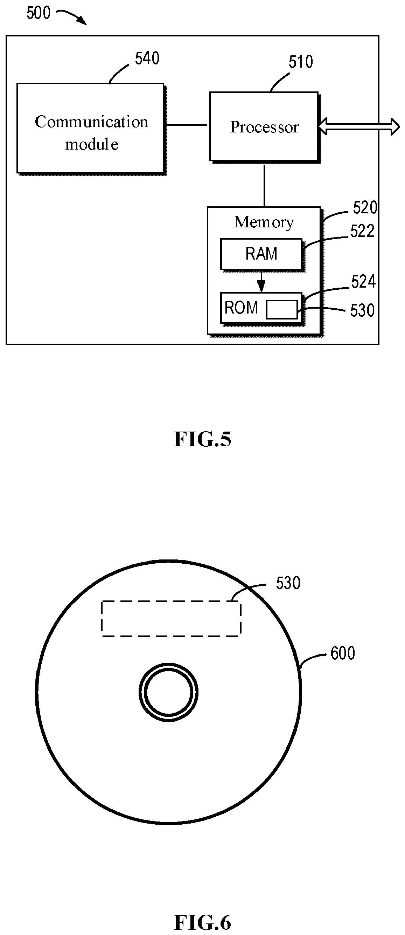

Fig. 5 illustrates a simplified block diagram of a device 500 that is suitable for implementing the embodiments of the present disclosure. The device 500 may be provided to implement the terminal device 110 or the network device 120 as shown in Fig. 1. As shown in the figure, the device 500 includes one or more processors 510, one or more memories 520 coupled to the processor 510, and one or more communication modules 540 coupled to the processor 510.

The communication module 540 is for bidirectional communications. The communication module 540 has one or more communication interfaces for communicating with one or more other modules or devices. The communication interface may represent any interface, which is required to communicate with other network elements. In some exemplary embodiments, the communication module 540 may include at least one antenna.

The processor 510 may be of any type suitable to the local technical network and may include one or more of the following: general purpose computers, special purpose computers, microprocessors, digital signal processors (DSPs) and processors based on multicore processor architecture, as non-limiting examples. The device 500 may have multiple processors, such as an application specific integrated circuit chip that is slaved in time to a clock which synchronizes the main processor.

The memory 520 may include one or more non-volatile memories and one or more volatile memories. Examples of the non-volatile memory include, but are not limited to, a read-only memory (ROM) 524, an electrically programmable read-only memory (EPROM), a flash memory, a hard disk, a compact disk (CD), a digital video disk (DVD), and other magnetic memories and/or optical memories. Examples of the volatile memory include, but are not limited to, a random access memory (RAM) 522 and other volatile memories that will not continue within a power down duration.

The computer program 530 includes a computer-executable instruction, which is executed by the associated processor 510. The program 530 may be stored in the ROM 524. The processor 510 may be loaded into the RAM 522 by the program 530, so as to execute any suitable action and processing.

Exemplary embodiments of the present disclosure may be implemented by the program 530, such that the device 500 may execute any procedure of the present disclosure as discussed with reference to Figs. 2-4. The embodiments of the present disclosure may also be implemented by hardware or by a combination of software and hardware.

In some exemplary embodiments, the program 530 may be tangibly contained in a computer-readable medium, and the computer-readable medium may be included in the device 500 (e.g., in the memory 520), or other storage devices accessible by the device 500. The device 500 may load the program 530 from the computer-readable medium into the RAM 522 for execution. The computer-readable medium may include any type of tangible non-volatile memory, such as an ROM, an EPROM, a flash memory, a hard disk, a CD and a DVD. Fig. 6 illustrates an example of a computer-readable medium 600 in the form of a CD or DVD. The computer-readable medium has a program 530 stored thereon.

Generally, various exemplary embodiments of the present disclosure may be implemented in hardware or dedicated circuits, software, logic, or any combination thereof. Some aspects may be implemented in hardware, while other aspects may be implemented in firmware or software, which may be executed by a controller, a microprocessor or other computing devices. For example, in some embodiments, various examples (e.g., methods, apparatuses or devices) of the present disclosure may be implemented partially or completely on the computer-readable medium. Although various aspects of the embodiments of the present disclosure are illustrated and described as block diagrams, flow diagrams or some other illustrations, it should be understood that, as a non-restrictive example, blocks, apparatuses, systems, technologies or methods described herein may be implemented in hardware, software, firmware, dedicated circuits or logic, general-purpose hardware or controllers, or other computing devices, or some combinations thereof.

The units included in the apparatuses and/or devices of the present disclosure may be implemented in various manners, including software, hardware, firmware or any combination thereof. In one embodiment, one or more units may be implemented by using software and/or firmware, such as a machine-executable instruction stored on a storage medium. In addition to or in lieu of the machine-executable instruction, some or all units in the apparatuses and/or devices may be implemented at least in part by one or more hardware logic components. For example, but is not limited to, an illustrative type of an available hardware logic component includes a field-programmable gate array (FPGA), an application-specific integrated circuit (ASIC), an application-specific standard product (ASSP), a system-level system on chip (SOC), a complex programmable logic device (CPLD), etc.

As an example, the embodiments of the present disclosure may be described in the context of the computer-executable instruction, the computer-executable instruction, for example, those included in program modules, is executed in a device on a target real or virtual processor. Generally, the program modules include routines, programs, libraries, objects, classes, components, data structures, and the like, which are used for executing particular tasks or implementing particular abstract data types. In various embodiments, the functionality of the program modules may be combined or split between the program modules as desired. The machine-executable instructions for the program modules may be executed in a local device or a distributed device. In the distributed device, the program modules may be located in local and remote storage media.

Program codes for executing the method of the present disclosure may be written in any combination of one or more programming languages. These program codes may be provided for processors or controllers of a general-purpose computer, a special-purpose computer or other programmable data processing apparatuses, such that the program codes, when executed by the processors or controllers, cause specified functions/operations in the flow diagrams and/or block diagrams to be implemented. The program codes may be executed entirely on a machine, partly on the machine, as a stand-alone software package, partly on the machine and partly on a remote machine, or entirely on the remote machine or server.

In the context of the present disclosure, the computer-readable medium may be any tangible medium, which may contain or store a program for use by or in combination with an instruction execution system, apparatus or device. The computer-readable medium may be a machine-readable signal medium or a machine-readable storage medium. The computer-readable medium may include, but is not limited to, electronic, magnetic, optical, electromagnetic, infrared or semiconductor systems, apparatuses or devices, or any suitable combination of the foregoing components. More specific examples of the machine-readable storage medium include: an electrical connection with one or more wires, a portable computer floppy disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing components.

In addition, although various operations are described in a particular sequence, this should not be understood as requiring that such operations are executed in the particular sequence shown or in a sequential sequence, or all illustrated operations are executed to achieve desired results. In some scenarios, multitasking and parallel processing may be advantageous. Likewise, although the foregoing discussion includes several specific exemplary embodiment details, these should not be construed as limitations to the scope of the present disclosure, but should be construed as descriptions of features that may be specific to particular embodiments. Some features described in the context of separate embodiments may also be implemented in combination in a single embodiment. On the contrary, the various features described in the context of a single embodiment may also be implemented separately in a plurality of embodiments or in any suitable sub-combination.

Although the present disclosure has been described in a language that is specific to structural features and/or method actions, it should be understood that the present disclosure defined in the appended claims is not necessarily limited to the particular features or actions described above. Rather, the specific features and actions described above are disclosed as example forms for implementing the claims.

## Claims

1. A method for updating subscriber subscription data of a subscriber identity module, comprising:
at a terminal device (110), based on determining that an indication to indicate the subscriber identity module is to be updated is received from a remote device (120), acquiring (310), from the indication, extended information for supporting a subscription data file update procedure;
triggering (320) the subscription data file update procedure at the terminal device (110) based on the extended information; and
updating (330) the subscriber identity module based on subscription data file update information acquired in the subscription data file update procedure.

2. The method according to claim 1, wherein acquiring (310) the extended information comprises:
acquiring at least one of the following:
an indication for enabling the subscriber identity module,
an indication for disabling the subscriber identity module,
an indication for triggering download of the subscription data file update information based on an initial subscription data file, and
a dedicated identity associated with the subscriber identity module.

3. The method according to claim 1, wherein the extended information comprises extended information based on a TR069 and TR181 protocol group.

4. The method according to claim 1, wherein triggering (320) the subscription data file update procedure comprises:
acquiring the initial subscription data file; and
establishing a connection between the terminal device (110) and the remote device (120) for transmitting the subscription data file update information, based on the initial subscription data file and the extended information, wherein for example
the connection comprises connection based on a hypertext transfer protocol.

5. The method according to claim 4, further comprising:
receiving the subscription data file update information based on the established connection, wherein the subscription data file update information comprises at least one target subscription data file, the at least one target subscription data file comprises parameters associated with the subscription data file update procedure, and the parameters comprise at least one of the following:
a corresponding identity of the at least one target subscription data file,
a service subscription data file name,
an international mobile subscriber identity,
an integrated circuit card identity,
an integrated service digital network number of mobile subscriber,
information for activating an updated subscription data file of the subscriber identity module, and
security information for the updated subscription data file.

6. The method according to any of claims 1-5, wherein the subscriber identity module comprises at least one of the following:
an embedded subscriber identity module, or
an integrated subscriber identity module.

7. The method according to any of claims 1-5, wherein the terminal device (110) comprises a customer premises equipment, and the remote device (120) comprises at least one of an automatic configuration server and a subscription management data preparation platform.

8. A method for updating subscriber subscription data of a subscriber identity module, comprising:
at a remote device (120), generating (410) an indication that the subscriber identity module at a terminal device (110) is to be updated, at least based on extended information for supporting a subscription data file update procedure;
sending (420) the indication to the terminal device (420); and
sending (430) subscription data file update information to the terminal device (110), based on determining that the subscription data file update procedure at the terminal device (110) is triggered.

9. The method according to claim 8, wherein the extended information comprises at least one of the following:
an indication for enabling the subscriber identity module,
an indication for disabling the subscriber identity module,
an indication for triggering download of the subscription data file update information based on an initial subscription data file, and
a dedicated identity associated with the subscriber identity module.

10. The method according to claim 8, wherein the extended information comprises extended information based on a TR069 and TR181 protocol group.

11. The method according to claim 8, wherein sending (430) the subscription data file update information to the terminal device (110) comprises:
based on determining that a connection between the terminal device (110) and the remote device (120) for transmitting the subscription data file update information has been established, sending, by means of the connection, the subscription data file update information to the terminal device (110), wherein for example
the connection comprises a connection based on a hypertext transfer protocol.

12. The method according to any of claims 9-11, wherein the subscription data file update information comprises at least one target subscription data file, the at least one target subscription data file comprises parameters associated with the subscription data file update procedure, and the parameters comprise at least one of the following:
a corresponding identity of the at least one target subscription data file,
a service subscription data file name,
an international mobile subscriber identity,
an integrated circuit card identity,
an integrated service digital network number of mobile subscriber,
information for activating an updated subscription data file of the subscriber identity module, and
security information for the updated subscription data file.

13. The method according to any of claims 9-11, wherein the subscriber identity module comprises at least one of the following:
an embedded subscriber identity module, or
an integrated subscriber identity module.

14. The method according to any of claims 9-11, wherein the terminal device (110) comprises a customer premises equipment, and the remote device (120) comprises at least one of an automatic configuration server and a subscription management data preparation platform.

15. A device (500) for updating subscriber subscription data of a subscriber identity module, comprising:
at least one processor (510); and
at least one memory (520) coupled to the at least one processor (510), wherein the at least one memory (520) comprises an instruction (530) stored therein; and
the at least one memory (520) and the instruction (530) are further configured to, with the at least one processor (510), cause the device (500) to execute the method according to any of claims 1-7 or to execute the method according to any of claims 8-14.

16. An apparatus for updating subscriber subscription data of a subscriber identity module, comprising:
means for based on determining that an indication to indicate the subscriber identity module is to be updated is received from a remote device, acquiring, from the indication, extended information for supporting a subscription data file update procedure;
means for triggering the subscription data file update procedure at the terminal device based on the extended information; and
means for updating the subscriber identity module based on subscription data file update information acquired in the subscription data file update procedure.

17. An apparatus for updating subscriber subscription data of a subscriber identity module, comprising:
means for generating an indication that the subscriber identity module at a terminal device is to be updated at least based on extended information for supporting a subscription data file update procedure;
means for sending the indication to the terminal device; and
means for sending subscription data file update information to the terminal device based on determining that the subscription data file update procedure at the terminal device is triggered.

18. A computer-readable medium, comprising instructions stored thereon that, when executed by at least one processing unit, causing the at least one processing unit is configured to execute the method of any of claims 1-7 or the method of any of claims 8-14.
